# EUROPEAN PATENT SPECIFICATION

(11) **EP 2 499 858 B1**
(45) Date of publication and mention of the grant of the patent: **23.10.2013**
(21) Application number: 09752817.8
(22) Date of filing: 13.11.2009
(51) Int. Cl.: H04W 28/16, H04L 12/14, H04L 12/24

(54) **SERVICE EVENT TRIGGER**
AUSLÖSER FÜR DIENSTEREIGNISSE
DÉCLENCHEUR D'ÉVÉNEMENT DE SERVICE

(43) Date of publication of application: 19.09.2012
(73) Proprietor: Telefonaktiebolaget LM Ericsson (publ), 164 83 Stockholm (SE)
(72) Inventor: MUNOZ DE LA TORRE ALONSO, Miguel Angel, E-ES-28002 Madrid (ES)
(74) Representative: O'Connell, David Christopher
(86) International application number: PCT/EP2009/065161
(87) International publication number: WO 2011/057672

(56) References cited:
- J-J P BALBAS ET AL: "Policy and charging control in the evolved packet system" IEEE COMMUNICATIONS MAGAZINE, IEEE SERVICE CENTER, PISCATAWAY, US LNKD- DOI:10.1109/MCOM.2009.4785382, vol. 47, no. 2, 1 February 2009 (2009-02-01), pages 68-74, XP011280741 ISSN: 0163-6804
- CAMIANT ET AL: "New mechanism for detection and report of applications to PCRF" 3GPP DRAFT; S2-095155_NEW MECHANISM FOR DETECT AND REPORT OF APP TO PCRF_V8, no. Kyoto; 20090904, 4 September 2009 (2009-09-04), XP050396666 [retrieved on 2009-08-25]
- "Universal Mobile Telecommunications System (UMTS); LTE; Policy and charging control over Gx reference point (3GPP TS 29.212 version 8.4.0 Release 8)" TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V8.4.0, 1 June 2009 (2009-06-01), XP014044665 cited in the application

## Description

### TECHNICAL FIELD

This invention relates to a service event trigger, and more particularly to a service event trigger for allowing modification of the Quality of Service parameters for a user session based on changes in the session.

### BACKGROUND

In the core network of a mobile communications network, resources must be provided for transmitting data between two users, and the resources that are provided determine the Quality of Service experienced by the users. In a network as defined by the ETSI 3rd Generation Partnership Project (3GPP), there are defined a Policy and Charging Rule Function (PCRF), a Policy and Charging Enforcement Function (PCEF), and a Gx reference point lying between the PCRF and the PCEF. As defined in 3GPP TS 29.212, the Gx reference point is used for provisioning and removal of Policy and Charging Control (PCC) rules from the PCRF to the PCEF and the transmission of traffic plane events from the PCEF to the PCRF. Thus, the Gx reference point can be used for charging control, policy control or both.

In the case of a network as defined in the 3GPP, the PCEF can be implemented in a Gateway GPRS Support Node (GGSN), and it is known for a GGSN to be able to support Deep Packet Inspection (DPI) technology, which allows the node to perform packet inspection and service classification on the data passing therethrough. More specifically, IP packets are classified according to a configured tree of rules so that they are assigned to a particular service session.

However, the known use of DPI technology in the GGSN does not allow any differentiation of the service based on the service classification.

"Completion of Gx procedures for IMS emergency calls", Ericsson, 3GPP Draft, 16 October 2009, discloses a network where the PCEF starts a timer for receiving new Policy and Charging Control (PCC) rules and, if the new PCC rules are not received before the timer expires, the PCEF performs IP-CAN session termination.

"3rd Generation Partnership Project; Technical specification group core network and terminals; Policy and Charging Control over Gx reference point (Release 9)", 3GPP Standard, 1 September 2009, discloses a network where the PCRF starts a timer to provide a grace period to the user in which the PCRF waits for Application Function (AF) service information and where the PCEF starts a timer, the expiry of which sets rules to inactive.

### SUMMARY

According to a first aspect of the present invention, there is provided a Policy and Charging Enforcement Function node for a telecommunications network, comprising: a service traffic detector, for performing service traffic detection during a session; a processor, for detecting a predetermined service condition from said service traffic detection; and an interface, for notifying a Policy and Charging Rule Function of the detected service condition by means of a service event defined in an Event Trigger AVP over a Gx reference point, wherein the processor is configured to determine whether a service stop condition is detected, and wherein the interface is configured to notify the Policy and Charging Rule Function by means of a service stop event if the processor determines that a service stop condition is detected.

This has the advantage that the Policy and Charging Rule Function is able to install suitable Policy and Charging Control rules, for example to allow a desired Quality of Service to be achieved for the detected service condition.

In one embodiment, the Policy and Charging Enforcement Function node further comprises a timer and the processor is further configured to determine whether the timer has expired and the interface is further configured to notify the Policy and Charging Rule Function by means of a service stop event if the processor determines that the timer has expired.

In one embodiment, the interface is further adapted to notify the Policy and Charging Rule Function whether the detected service condition is a service start or a service stop by means of a service start-stop AVP over the Gx reference point. This allows the Policy and Charging Rule Function to install suitable Policy and Charging Control rules when a service is started, and then to reinstate the original Policy and Charging Control rules when a service is stopped.

In one embodiment, the interface is further adapted to notify the Policy and Charging Rule Function of an associated IP address by means of an IP address AVP over the Gx reference point and to notify the Policy and Charging Rule Function of flow information for the session by means of another AVP, such as a Media-Content-description AVP.

In one embodiment, the interface is further adapted to notify the Policy and Charging Rule Function of a service to which the detected service condition applies by means of an application identifier AVP over the Gx reference point.

According to other aspects of the invention, there are provided a Policy and Charging Rule Function configured to receive notification from the Policy and Charging Enforcement Function node, and methods of operation, corresponding to the Policy and Charging Enforcement Function of the first aspect.

### BRIEF DESCRIPTION OF THE DRAWINGS

Figure 1 is a block schematic diagram, showing a part of a telecommunications network in accordance with an aspect of the invention.
Figure 2 is a flow chart, illustrating a method in accordance with an aspect of the invention.
Figure 3 shows the message flow during a first part of the method of Figure 2.
Figure 4 shows the message flow during a second part of the method of Figure 2.

### DETAILED DESCRIPTION

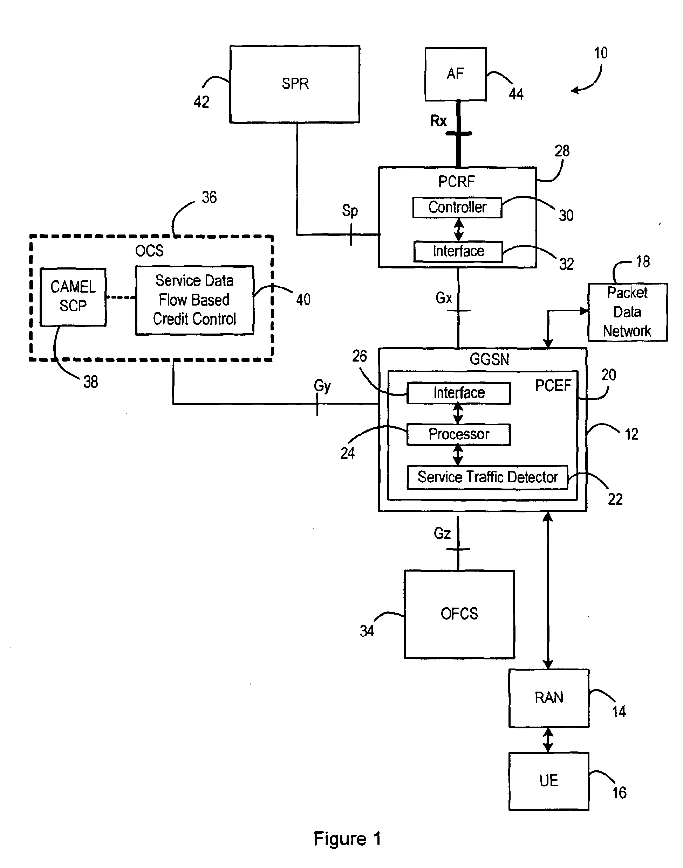

Figure 1 shows a part of a telecommunications network, in particular a part of a Core Network 10 of a mobile communications network as defined in the 3GPP specifications.

One element of the Core Network 10 is the Gateway GPRS Support Node (GGSN) 12. As is conventional, the Radio Access Network (RAN) 14 of the mobile communications network is connected to the GGSN 12, allowing a User Equipment (UE) 16 to establish a call over a suitable wireless interface. The call can be routed back through the RAN 14 to another UE in the network, or it can be connected over a Packet Data Network 18, such as the internet, to a fixed line or mobile communications device or, in the case of a data session, to a remote server. This aspect of the network is conventional, and will not be described further herein.

As is also conventional, the GGSN 12 includes the Policy and Charging Enforcement Function (PCEF). In this case, the PCEF is included in a GGSN that has a service traffic detection block 22, enabling it to perform Deep Packet Inspection (DPI). This allows packet inspection and service classification, which consists of classifying IP packets according to a configured tree of rules so that they are assigned to a particular service session. The node with DPI capabilities captures the user and signaling traffic, and is able to assign IP packets to a particular service session and also to detect service start and service stop conditions.

The PCEF also includes a processor 24, which performs a part of the process described in more detail below, and an interface block 26, for connection to other blocks in the Core Network 10.

Although Figure 1 shows the service traffic detection block 22, processor 24, and interface block 26 as separate blocks for ease of understanding, it will be appreciated that the relevant functions can be performed by any convenient means, and that these blocks need not be recognizable as distinct in practice.

In other embodiments of the invention, the PCEF can be implemented in the Packet Data Network (PDN) Gateway.

As is conventional, the Core Network 10 also includes a Policy and Charging Rule Function (PCRF) 28, the structure of which is again generally conventional, including a processor 30, which performs a part of the process described in more detail below, and an interface block 32, for connection to other blocks in the Core Network 10. For example, the PCRF 28 can be implemented in an Ericsson Service-Aware Policy Controller (SAPC).

Although Figure 1 shows the processor 30 and the interface block 32 as separate blocks for ease of understanding, it will be appreciated that the relevant functions can be performed by any convenient means, and that these blocks need not be recognizable as distinct in practice.

The PCEF 20 is also connected to an Offline Charging System (OFCS) 34 and an Online Charging System 36, which includes a Customised Applications for Mobile network Enhanced Logic (CAMEL) Service Control Point 38 and a Service Data Flow Based Credit Control block 40.

The PCRF 28 is connected to a Subscription Profile Repository (SPR) 42, and to an Application Function (AF) 44. For example, the AF 44 may be the IP Multimedia Subsystem (IMS) Proxy Call Session Control Function (P-CSCF).

The PCEF 20 and the PCRF 28 communicate over the Gx reference point, as defined in 3GPP TS 29.212. The Gx reference point is used for provisioning and removal of PCC rules from the PCRF to the PCEF and the transmission of traffic plane events from the PCEF to the PCRF. The Gx reference point can be used for charging control, policy control or both.

The PCRF 28 and the AF 44 communicate over the Rx reference point, as defined in 3GPP TS 29.214, which is used to exchange application level session information between the PCRF and the AF.

The PCEF 20 and the OFCS 34 communicate over the Gz reference point, while the PCEF 20 and the OCS 36 communicate over the Gy reference point, and the PCRF 28 and the SPR 42 communicate over the Sp reference point.

The general structure described above is shown in 3GPP TS 29.212, and so will not be described further herein.

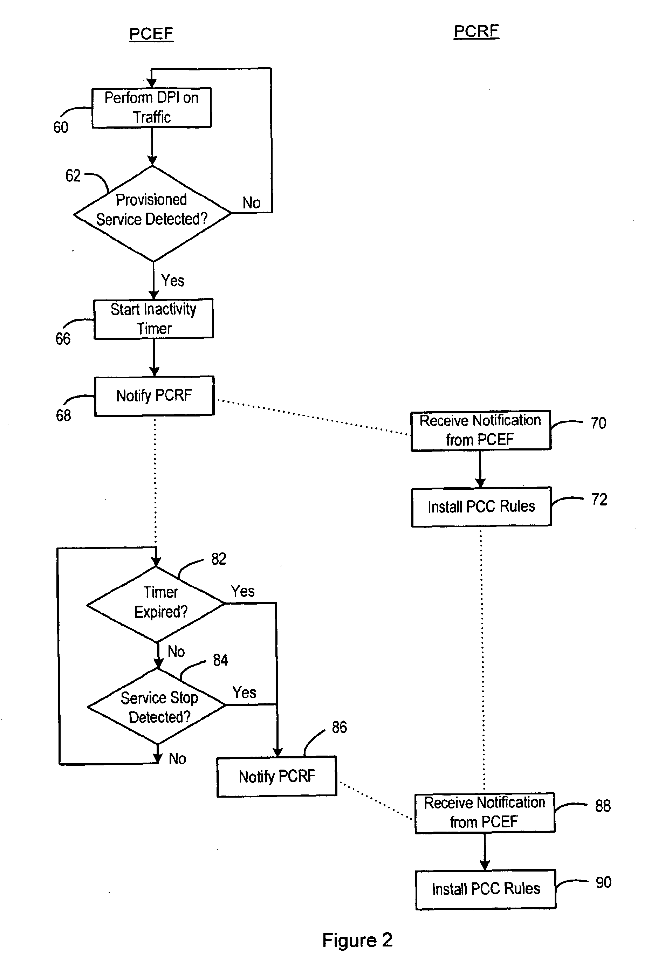

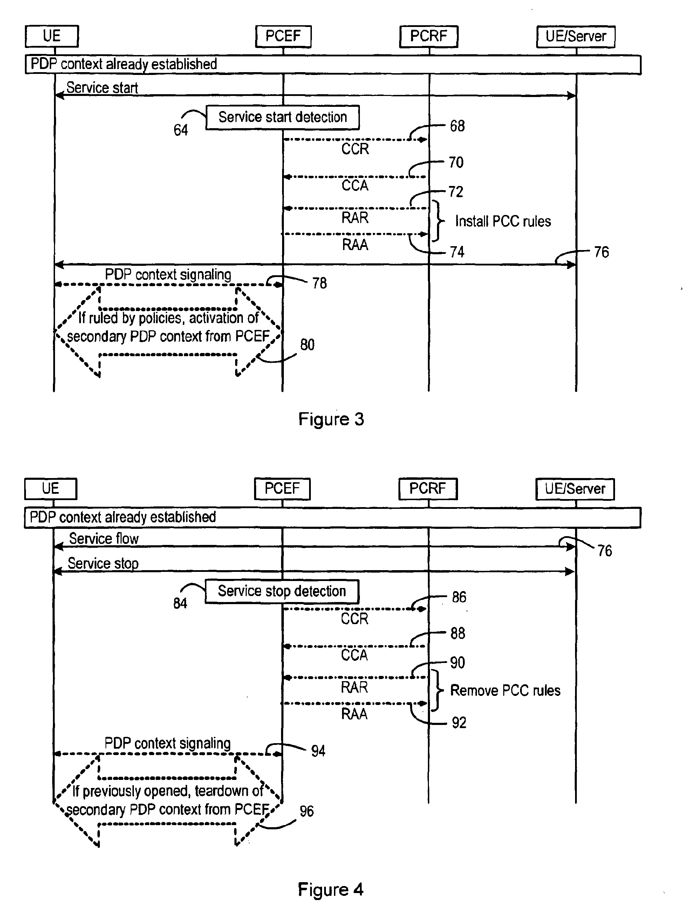

A method in accordance with the present invention will now be described in more detail with reference to Figure 2, in the form of a flow chart, and Figures 3 and 4, showing the message flow between the various nodes. Specifically, Figure 2 shows steps performed in the PCEF 20 and the PCRF 28, while Figures 3 and 4 show messages transmitted between the UE 16, the PCEF 20, the PCRF 28, and the other UE or server to which the UE 16 is connected.

The process starts at a time when the UE 16 already has a general purpose Packet Data Protocol (PDP) context established with the remote UE/server. In step 60, the PCEF performs Deep Packet Inspection (DPI), or another form of service traffic detection, on the data traffic.

Before beginning the process, the PCEF is provisioned with a set of services, for which events should be notified to the PCRF. For example, the system may be configured in such a way that certain services are identified as premium content, while other services are identified as non-premium content. As more specific examples, time-critical music or video clips, or an operator's own portal may be specifically identified as premium content, while services such as peer-to-peer file exchanges might be regarded as non-premium content. The PCEF might be configured to recognize any of these services. The PCRF should be provisioned with the same set of services, and with a policy that will apply for each of those services.

Thus, in step 62, the PCEF monitors the traffic, until it detects the start of one of the provisioned services, also indicated at point 64 in Figure 3. The PCEF can detect the start of the service by any suitable technique, for example using heuristic methods, enabled by the use of DPI.

When the PCEF detects the service start condition, in step 66 it starts an inactivity timer. Then, in step 68, the PCEF 20 notifies the PCRF 28 of the service start condition by means of a credit control request (CCR) command over the Gx interface by using the Event-Trigger AVP set to a value indicating a newly-defined SERVICE event.

In this illustrated embodiment of the invention, a newly-defined Service_Information AVP is used to convey additional information to allow the PCRF to handle this notification.

A Service-Start-Stop AVP indicates if the event corresponds to either a service start or a service stop (thus, in this case, it is set to indicate a service start event).

A Framed-IP-Address AVP contains the IP-CAN session associated IP address, encoded as specified in RFC 4005. Another AVP, such as the Media-Component-Description AVP, contains relevant flow information. For example, RTSP signalling conveys information about the IP addresses and ports corresponding to the Real-time Transport Protocol (RTP) audio or video data flows negotiated during signalling, so that the PCRF may create secondary PDP contexts under those negotiated IP addresses and ports.

An Application-Identifier AVP contains information that identifies the particular service detected (for example Real-Time Streaming Protocol (RTSP)). This information may be used by the PCRF to provided differentiated QoS for different application services.

At step 70, the PCRF receives the notification from the PCEF, and signals this by sending a credit control answer (CCA) message with a result code indicating that the notification was a success.

At step 72, the PCRF installs the corresponding PCC rules by transmitting to the PCEF the Gx reauthorization request (RAR) message. This allows the modification of the existing bearer (or the creation of a dedicated bearer) with either higher or lower QoS settings, depending on the service which is being started. At step 74, the PCEF acknowledges this command, by sending to the PCRF a reauthorization answer with a result code indicating that the notification was a success.

In response to the notification, the PCRF may take any suitable steps for controlling the service provision in response to the detected service condition. This may involve modification of the QoS settings for the service session, and this in turn may consist of any of the following actions from a non-exhaustive list containing: Gx initiated PDP context modification (i.e. when a GGSN acts as the PCEF); change of traffic handling priority (THP) for the existing bearer; change of maximum bit rate (MBR) for the existing bearer; IP Flow Bandwidth Management; or network initiation of a dedicated IP-CAN bearer with dynamic PCC rules (i.e. when a GGSN acts as the PCEF).

For example, a better QoS can be provided for certain premium services, such as a network operator's portal page, ring tones, music or video clips or 3rd party peered content, in order to guarantee the bandwidth required by that particular service, while a worse QoS can be provided for certain low value services, such as peer-to-peer file exchanges, non-sponsored downloads and the like, such that these services receive their full bandwidth requirement only when available.

It should be noted that it would also be possible to trigger any other action when the PCRF is notified of the service start condition.

Thereafter, the service flow can take place, as shown at 76 in Figure 3, with the appropriate service policies applied. As indicated by way of example at 78 in Figure 3, and as mentioned above, this may require appropriate PDP context signalling, to establish a secondary PDP context 80 between the UE 16 and the PCEF 20. In other cases, the service may be carried over the existing PDP context, and it is not necessary to create a secondary PDP context.

While the detected service in is progress, the PCEF performs step 82 of the process shown in Figure 2, in order to determine whether the inactivity timer has expired (i.e. whether the service has been inactive for a predetermined period of time set by the timer). If not, the process passes to step 84, in which it is determined whether a service stop condition is detected. If not, the process returns to step 82. The PCEF can detect the stopping of the service by any suitable technique, for example using heuristic methods, enabled by the use of DPI.

If it is determined in step 82 that the inactivity timer has expired, or it is determined in step 84 that the service stop condition is detected, the process passes to step 86, in which the PCEF 20 notifies the PCRF 28 by means of a credit control request (CCR) command over the Gx interface by using the Event-Trigger AVP set to the value indicating the newly-defined SERVICE event.

In this illustrated embodiment of the invention, the newly-defined Service_Information AVP is used to convey additional information to allow the PCRF to handle this notification.

The Service-Start-Stop AVP in this case is set to indicate a service stop event. The Framed-IP-Address AVP contains the IP-CAN session associated IP address, encoded as specified in RFC 4005. Another AVP, such as the Application-Identifier AVP contains information that identifies the particular service detected (for example Real-Time Streaming Protocol (RTSP)).

At step 88, the PCRF receives the notification from the PCEF, and signals this by sending a credit control answer (CCA) message with a result code indicating that the notification was a success.

At step 90, the PCRF removes the previously installed PCC rules by transmitting to the PCEF the Gx reauthorization request (RAR) message. This allows the restoration of the original QoS settings, by the modification of the existing bearer (or the deletion of the dedicated bearer created for that service). At step 92, the PCEF acknowledges this command, by sending to the PCRF a reauthorization answer with a result code indicating that the notification was a success.

As shown in Figure 4, where a secondary PDP context was established between the UE 16 and the PCEF 20, appropriate PDP context signalling 94 can be used to tear down the secondary PDP context at step 96.

The invention has been described above with reference to the situation where the PCEF reacts to a predetermined service condition in the form of a service start or a service stop of a specified service. A similar procedure can be followed in the event of a service update.

For example, when a user pauses a running streaming service or when a new flow is added to an existing service, such as adding a video component to an existing IMS voice call, this can be detected by the PCEF by any suitable technique, for example using heuristic methods, enabled by the use of DPI.

The Service-Start-Stop AVP in this case is set to indicate a service update event, and the notification to the PCRF might trigger modification of QoS parameters for the service session.

As described so far, the method involves transmission over the Gx interface. However, a local solution, with no Gx involvement, is also possible. In that case, the PCEF should be provisioned with a set of services (for example such as RTSP, as described previously), for which this functionality should be triggered and should also be provisioned with the local policy that will apply for each of those services. The PCEF can be configured to detect the service start condition, as described above, and on such detection, the PCEF starts an inactivity timer. Based on the local policies provisioned for that service, the PCEF may then trigger the modification of the existing bearer, or the creation of a dedicated bearer, with either higher or lower QoS settings, depending on the service which is being started. When the PCEF detects the service stop condition, or the inactivity timer expires, the PCEF (based on the local policies provisioned for that service) should restore the previous QoS settings, by modifying the existing bearer or by deleting the dedicated bearer previously created for the service.

There is thus provided an enhancement to the Gx interface allowing a PCEF that is able to perform service traffic detection to notify a PCRF of a service condition, by means of a specific event in the Event-Trigger AVP. This allows the PCRF to install the corresponding PCC rules in order to modify the QoS parameters for that particular user session.

## Claims

1. A Policy and Charging Enforcement Function node (20) for a telecommunications network (10), comprising:
a service traffic detector (22), for performing service traffic detection during a session;
a processor (24), for detecting a predetermined service condition from said service traffic detection; and
an interface (26), for notifying a Policy and Charging Rule Function (28) of the detected service condition by means of a service event defined in an Event Trigger AVP over a Gx reference point,
wherein the processor (24) is configured to determine whether a service stop condition is detected, and
**characterized in that** the interface (26) is configured to notify the Policy and Charging Rule Function (28) by means of a service stop event if the processor (24) determines that a service stop condition is detected.

2. A Policy and Charging Enforcement Function node (20) as claimed in claim 1, further comprising a timer and wherein the processor (24) is further configured to determine whether the timer has expired and wherein the interface (26) is further configured to notify the Policy and Charging Rule Function (28) by means of a service stop event if the processor (24) determines that the timer has expired.

3. A Policy and Charging Enforcement Function node (20) as claimed in claim 1, wherein the interface (26) is further adapted to notify the Policy and Charging Rule Function (28) whether the detected service condition is a service start or a service stop by means of a service start-stop AVP over the Gx reference point.

4. A Policy and Charging Enforcement Function node (20) as claimed in Claim 1, wherein the interface is further adapted to notify the Policy and Charging Rule Function (28) of an associated IP address for the session by means of an IP address AVP, and of flow information by means of a Media-Component-Description AVP over the Gx reference point.

5. A Policy and Charging Enforcement Function node (20) as claimed in claim 1, wherein the interface (26) is further adapted to notify the Policy and Charging Rule Function (28) of a service to which the detected service condition applies by means of an application identifier AVP over the Gx reference point.

6. A method for controlling service provision in a Policy and Charging Enforcement Function node (20) of a telecommunications network (10), the method comprising:
performing service traffic detection during a session;
detecting a predetermined service condition from said service traffic detection; and
notifying a Policy and Charging Rule Function (28) of the detected service condition by means of a service event defined in an Event Trigger AVP over a Gx reference point;
the method further comprising the step of:
determining whether a service stop condition is detected; and
wherein the step of notifying a Policy and Charging Rule Function (28) of the detected service condition is **characterized by** notifying the Policy and Charging Rule Function (28) by means of a service stop event if a service stop condition is determined to be detected.

7. A method as claimed in claim 6, further comprising the step of:
determining whether a timer has expired; and
wherein the step of notifying a Policy and Charging Rule Function (28) of the detected service condition further comprises notifying the Policy and Charging Rule Function (28) by means of a service stop event if the timer is determined to have expired.

8. A method as claimed in claim 6, further comprising:
notifying the Policy and Charging Rule Function (28) whether the detected service condition is a service start or a service stop by means of a service start-stop AVP over the Gx reference point.

9. A method as claimed in claim 6, further comprising:
notifying the Policy and Charging Rule Function (28) of an associated IP address for the session by means of an IP address AVP and of flow information by means of a Media-Component-Description AVP over the Gx reference point.

10. A method as claimed in claim 6, further comprising:
notifying the Policy and Charging Rule Function (28) of a service to which the detected service condition applies by means of an application identifier AVP over the Gx reference point.

11. A Policy and Charging Rule Function node (28) for a telecommunications network, comprising:
an interface (32) for receiving notification from a Policy and Charging Enforcement Function (20) of a detected predetermined service condition by means of a service event defined in an Event Trigger AVP over a Gx reference point; and
a controller (30) for controlling a service provision in response to the detected service condition,
**characterized in that** the interface (32) is configured to receive notification from the Policy and Charging Enforcement Function (20) of a determination that a service stop condition is detected by means of a service stop event.

12. A Policy and Charging Rule Function node (28) as claimed in claim 11, wherein the interface (32) is further configured to receive notification from the Policy and Charging Enforcement Function (32) of a determination that a timer has expired by means of a service stop event.

13. A Policy and Charging Rule Function node (28) as claimed in claim 11, wherein the interface (32) is further adapted to receive notification whether the detected service condition is a service start or a service stop by means of a service start-stop AVP over the Gx reference point.

14. A Policy and Charging Rule Function node (28) as claimed in claim 11, wherein the interface (32) is further adapted to receive notification of an associated IP address for the session by means of an IP address AVP and of flow information by means of a Media-Component-Description AVP over the Gx reference point.

15. A Policy and Charging Rule Function node (28) as claimed in claim 11, wherein the interface (32) is further adapted to receive notification of a service to which the detected service condition applies by means of an application identifier AVP over the Gx reference point.

16. A method for controlling service provision in a node of a telecommunications network (10), the method comprising:
in a Policy and Charging Enforcement Function (20):
performing service traffic detection during a session;
detecting a predetermined service condition from said service traffic detection; and
notifying a Policy and Charging Rule Function (28) of the detected service condition by means of a service event defined in an Event Trigger AVP over a Gx reference point;
the method in the Policy and Charging Enforcement Function (20) further comprising:
determining whether a service stop condition is detected; and
wherein the step of notifying a Policy and Charging Rule Function (28) of the detected service condition is **characterized by** notifying the Policy and Charging Rule Function (28) by means of a service stop event if a service stop condition is determined to be detected; and
in the Policy and Charging Rule Function (28):
receiving notification of the detected service condition by means of the service stop event; and
controlling the service provision in response to the detected service condition.

17. A method as claimed in claim 16, wherein the method in the Policy and Charging Enforcement Function (20) further comprises:
determining whether a timer has expired; and
wherein the step of notifying a Policy and Charging Rule Function (28) of the detected service condition further comprises notifying the Policy and Charging Rule Function (28) by means of a service stop event if the timer is determined to have expired.

18. A method as claimed in claim 16, further comprising, in the Policy and Charging Enforcement Function (20):
notifying the Policy and Charging Rule Function (28) whether the detected service condition is a service start or a service stop by means of a service start-stop AVP over the Gx reference point.

19. A method as claimed in claim 16, further comprising, in the Policy and Charging Enforcement Function (28):
notifying the Policy and Charging Rule Function (20) of an associated IP address for the session by means of an IP address AVP and of flow information by means of a Media-Component-Description AVP over the Gx reference point.

20. A method as claimed in claim 16, further comprising, in the Policy and Charging Enforcement Function (20):
notifying the Policy and Charging Rule Function (28) of a service to which the detected service condition applies by means of an application identifier AVP over the Gx reference point.

## Patentansprüche

1. Policy-and-Charging-Enforcement-Function-Knoten (20) für ein Telekommunikationsnetz (10), umfassend:
einen Dienstdatenverkehrsdetektor (22) zum Durchführen einer Dienstdatenverkehrserkennung während einer Sitzung,
einen Prozessor (24) zum Erkennen einer festgelegten Dienstbedingung aus der Dienstdatenverkehrserkennung und
eine Schnittstelle (26) zum Benachrichtigen einer Policy-and-Charging-Rule-Function (28) über die erkannte Dienstbedingung mittels eines Dienstereignisses, das in einem Event-Trigger-AVP definiert ist, über einen Gx-Referenzpunkt,
wobei der Prozessor (24) dafür konfiguriert ist, zu bestimmen, ob eine Dienststoppbedingung erkannt wird, und
**dadurch gekennzeichnet, dass** die Schnittstelle (26) dafür konfiguriert ist, die Policy-and-Charging-Rule-Function (28) mittels eines Dienststoppereignisses zu benachrichtigen, wenn der Prozessor (24) bestimmt, dass eine Dienststoppbedingung erkannt wird.

2. Policy-and-Charging-Enforcement-Function-Knoten (20) nach Anspruch 1, ferner einen Zeitgeber umfassend und wobei der Prozessor (24) ferner dafür konfiguriert ist, zu bestimmen, ob der Zeitgeber abgelaufen ist, und wobei die Schnittstelle (26) ferner dafür konfiguriert ist, die Policy-and-Charging-Rule-Function (28) mittels eines Dienststoppereignisses zu benachrichtigen, wenn der Prozessor (24) bestimmt, dass der Zeitgeber abgelaufen ist.

3. Policy-and-Charging-Enforcement-Function-Knoten (20) nach Anspruch 1, wobei die Schnittstelle (26) ferner dafür eingerichtet ist, die Policy-and-Charging-Rule-Function (28) mittels eines Dienst-Start-Stopp-AVP über den Gx-Referenzpunkt zu benachrichtigen, ob die erkannte Dienstbedingung ein Dienststart oder ein Dienststopp ist.

4. Policy-and-Charging-Enforcement-Function-Knoten (20) nach Anspruch 1, wobei die Schnittstelle ferner dafür eingerichtet ist, die Policy-and-Charging-Rule-Function (28) über den Gx-Referenzpunkt mittels einer IP-Adresse-AVP über eine zugeordnete IP-Adresse für die Sitzung zu benachrichtigen und mittels einer Medienkomponentenbeschreibungs-AVP über Datenstrominformationen.

5. Policy-and-Charging-Enforcement-Function-Knoten (20) nach Anspruch 1, wobei die Schnittstelle (26) ferner dafür eingerichtet ist, die Policy-and-Charging-Rule-Function (28) über den Gx-Referenzpunkt mittels eines Anwendungskennungs-AVP über einen Dienst zu benachrichtigen, für den die erkannte Dienstbedingung gilt.

6. Verfahren zum Steuern einer Dienstbereitstellung in einem Policy-and-Charging-Enforcement-Function-Knoten (20) eines Telekommunikationsnetzes (10), wobei das Verfahren Folgendes umfasst:
Durchführen einer Dienstdatenverkehrserkennung während einer Sitzung,
Erkennen einer festgelegten Dienstbedingung aus der Dienstdatenverkehrserkennung und
Benachrichtigen einer Policy-and-Charging-Rule-Function (28) über die erkannte Dienstbedingung mittels eines Dienstereignisses, das in einem Event-Trigger-AVP definiert ist, über einen Gx-Referenzpunkt,
wobei das Verfahren ferner folgenden Schritt umfasst:
Bestimmen, ob eine Dienststoppbedingung erkannt wird, und
wobei der Schritt des Benachrichtigens einer Policy-and-Charging-Rule-Function (28) über die erkannte Dienstbedingung **gekennzeichnet ist durch** das Benachrichtigen der Policy-and-Charging-Rule-Function (28) mittels eines Dienststoppereignisses, wenn bestimmt wird, dass eine Dienststoppbedingung erkannt wird.

7. Verfahren nach Anspruch 6, ferner folgenden Schritt umfassend:
Bestimmen, ob ein Zeitgeber abgelaufen ist, und
wobei der Schritt des Benachrichtigens einer Policy-and-Charging-Rule-Function (28) über die erkannte Dienstbedingung ferner das Benachrichtigen der Policy-and-Charging-Rule-Function (28) mittels eines Dienststoppereignisses umfasst, wenn bestimmt wird, dass der Zeitgeber abgelaufen ist.

8. Verfahren nach Anspruch 6, ferner umfassend:
Benachrichtigen der Policy-and-Charging-Rule-Function (28) mittels eines Dienst-Start-Stopp-AVP über den Gx-Referenzpunkt, ob die erkannte Dienstbedingung ein Dienststart oder ein Dienststopp ist.

9. Verfahren nach Anspruch 6, ferner umfassend:
Benachrichtigen der Policy-and-Charging-Rule-Function (28) mittels einer IP-Adresse-AVP über eine zugeordnete IP-Adresse für die Sitzung und mittels einer Medienkomponentenbeschreibungs-AVP über Datenstrominformationen über den Gx-Referenzpunkt.

10. Verfahren nach Anspruch 6, ferner umfassend:
Benachrichtigen der Policy-and-Charging-Rule-Function (28) mittels eines Anwendungskennungs-AVP über den Gx-Referenzpunkt über einen Dienst, für den die erkannte Dienstbedingung gilt.

11. Policy-and-Charging-Rule-Function-Knoten (28) für ein Telekommunikationsnetz, umfassend:
eine Schnittstelle (32) zum Empfangen einer Benachrichtigung von einer Policy-and-Charging-Enforcement-Function (20) über eine erkannte festgelegte Dienstbedingung mittels eines Dienstereignisses, das in einem Event-Trigger-AVP definiert ist, über einen Gx-Referenzpunkt, und
einen Controller (30) zum Steuern einer Dienstbereitstellung in Reaktion auf die erkannte Dienstbedingung,
**dadurch gekennzeichnet, dass** die Schnittstelle (32) dafür konfiguriert ist, mittels eines Dienststoppereignisses eine Benachrichtigung von der Policy-and-Charging-Enforcement-Function (20) über eine Bestimmung zu empfangen, dass eine Dienststoppbedingung erkannt wird.

12. Policy-and-Charging-Rule-Function-Knoten (28) nach Anspruch 11, wobei die Schnittstelle (32) ferner dafür konfiguriert ist, mittels eines Dienststoppereignisses eine Benachrichtigung von der Policy-and-Charging-Enforcement-Function (20) über eine Bestimmung zu empfangen, dass ein Zeitgeber abgelaufen ist.

13. Policy-and-Charging-Rule-Function-Knoten (28) nach Anspruch 11, wobei die Schnittstelle (32) ferner dafür konfiguriert ist, mittels eines Dienst-Start-Stopp-AVP über den Gx-Referenzpunkt eine Benachrichtigung zu empfangen, ob die erkannte Dienstbedingung ein Dienststart oder ein Dienststopp ist.

14. Policy-and-Charging-Rule-Function-Knoten (28) nach Anspruch 11, wobei die Schnittstelle (32) ferner dafür konfiguriert ist, über den Gx-Referenzpunkt mittels einer IP-Adresse-AVP eine Benachrichtigung über eine zugeordnete IP-Adresse für die Sitzung zu empfangen und mittels einer Medienkomponentenbeschreibungs-AVP eine Benachrichtigung über Datenstrominformationen.

15. Policy-and-Charging-Rule-Function-Knoten (28) nach Anspruch 11, wobei die Schnittstelle (32) ferner dafür konfiguriert ist, mittels eines Anwendungskennungs-AVP über den Gx-Referenzpunkt eine Benachrichtigung über einen Dienst zu empfangen, für den die erkannte Dienstbedingung gilt.

16. Verfahren zum Steuern einer Dienstbereitstellung in einem Knoten eines Telekommunikationsnetzes (10), wobei das Verfahren Folgendes umfasst:
in einer Policy-and-Charging-Enforcement-Function (20):
Durchführen einer Dienstdatenverkehrserkennung während einer Sitzung,
Erkennen einer festgelegten Dienstbedingung aus der Dienstdatenverkehrserkennung und
Benachrichtigen einer Policy-and-Charging-Rule-Function (28) über die erkannte Dienstbedingung mittels eines Dienstereignisses, das in einem Event-Trigger-AVP definiert ist, über einen Gx-Referenzpunkt,
wobei das Verfahren in der Policy-and-Charging-Enforcement-Function (20) ferner Folgendes umfasst:
Bestimmen, ob eine Dienststoppbedingung erkannt wird, und
wobei der Schritt des Benachrichtigens einer Policy-and-Charging-Rule-Function (28) über die erkannte Dienstbedingung **gekennzeichnet ist durch** das Benachrichtigen der Policy-and-Charging-Rule-Function (28) mittels eines Dienststoppereignisses, wenn bestimmt wird, dass eine Dienststoppbedingung erkannt wird, und
in der Policy-and-Charging-Rule-Function (28):
Empfangen einer Benachrichtigung über die erkannte festgelegte Dienstbedingung mittels des Dienstereignisses und
Steuern der Dienstbereitstellung in Reaktion auf die erkannte Dienstbedingung.

17. Verfahren nach Anspruch 15, wobei das Verfahren in der Policy-and-Charging-Enforcement-Function (20) ferner Folgendes umfasst:
Bestimmen, ob ein Zeitgeber abgelaufen ist, und
wobei der Schritt des Benachrichtigens einer Policy-and-Charging-Rule-Function (28) über die erkannte Dienstbedingung ferner das Benachrichtigen der Policy-and-Charging-Rule-Function (28) mittels eines Dienststoppereignisses umfasst, wenn bestimmt wird, dass der Zeitgeber abgelaufen ist.

18. Verfahren nach Anspruch 16, ferner Folgendes in der Policy-and-Charging-Enforcement-Function (20) umfassend:
Benachrichtigen der Policy-and-Charging-Rule-Function (28) mittels eines Dienst-Start-Stopp-AVP über den Gx-Referenzpunkt, ob die erkannte Dienstbedingung ein Dienststart oder ein Dienststopp ist.

19. Verfahren nach Anspruch 16, ferner Folgendes in der Policy-and-Charging-Enforcement-Function (20) umfassend:
Benachrichtigen der Policy-and-Charging-Rule-Function (28) mittels einer IP-Adresse-AVP über eine zugeordnete IP-Adresse für die Sitzung und mittels einer Medienkomponentenbeschreibungs-AVP über Datenstrominformationen über den Gx-Referenzpunkt.

20. Verfahren nach Anspruch 16, ferner Folgendes in der Policy-and-Charging-Enforcement-Function (20) umfassend:
Benachrichtigen der Policy-and-Charging-Rule-Function (28) mittels eines Anwendungskennungs-AVP über den Gx-Referenzpunkt über einen Dienst, für den die erkannte Dienstbedingung gilt.

## Revendications

1. Noeud de fonction d'application de politique et de facturation (20) pour un réseau de télécommunications (10), comprenant :
un détecteur de trafic de service (22), destiné à effectuer une détection de trafic de service durant une session ;
un processeur (24), destiné à détecter une condition de service prédéterminée à partir de ladite détection de trafic de service ;
une interface (26), destinée à notifier à une fonction de règles de politique et de facturation (28) la condition de service détectée au moyen d'un événement de service défini dans une AVP de déclencheur d'événement sur un point de référence Gx,
dans lequel le processeur (24) est configuré pour déterminer si une condition d'arrêt de service est détectée, et
**caractérisé en ce que** l'interface (26) est configurée pour notifier à la fonction de règles de politique et de facturation (28) au moyen d'un événement d'arrêt de service si le processeur (24) détermine que la condition d'arrêt de service est détectée.

2. Noeud de fonction d'application de politique et de facturation (20) tel que revendiqué dans la revendication 1, comprenant en outre un temporisateur et où le processeur (24) est en outre configuré pour déterminer si le temporisateur a expiré et où l'interface (26) est en outre configurée pour notifier à la fonction de règles de politique et de facturation (28) au moyen d'un événement d'arrêt de service si le processeur (24) détermine que le temporisateur a expiré.

3. Noeud de fonction d'application de politique et de facturation (20) tel que revendiqué dans la revendication 1, dans lequel l'interface (26) est en outre adaptée pour notifier à la fonction de règles de politique et de facturation (28) si la condition de service détectée est un début de service ou un arrêt de service au moyen d'une AVP de début-arrêt de service sur le point de référence Gx.

4. Noeud de fonction d'application de politique et de facturation (20) tel que revendiqué dans la revendication 1, dans lequel l'interface est en outre adaptée pour notifier à la fonction de règles de politique et de facturation (28) une adresse IP associée pour la session au moyen d'une AVP d'adresse IP, et des informations de flux au moyen d'une AVP de description de composant multimédia sur le point de référence Gx.

5. Noeud de fonction d'application de politique et de facturation (20) tel que revendiqué dans la revendication 1, dans lequel l'interface (26) est en outre adaptée pour notifier à la fonction de règles de politique et de facturation (28) un service auquel la condition de service détectée s'applique au moyen d'une AVP d'identificateur d'application sur le point de référence Gx.

6. Procédé de commande de mise à disposition de service dans un noeud de fonction d'application de politique et de facturation (20) d'un réseau de télécommunications (10), le procédé comprenant le fait :
d'effectuer une détection de trafic de service durant une session ;
de détecter une condition de service prédéterminée à partir de ladite détection de trafic de service ; et
de notifier à une fonction de règles de politique et de facturation (28) la condition de service détectée au moyen d'un événement de service défini dans une AVP de déclencheur d'événement sur un point de référence Gx ;
le procédé comprenant en outre l'étape consistant :
à déterminer si une condition d'arrêt de service est détectée ; et
où l'étape de notification de la condition de service détectée à une fonction de règles de politique et de facturation (28) est **caractérisée par** le fait de notifier à la fonction de règles de politique et de facturation (28) au moyen d'un événement d'arrêt de service s'il est déterminé qu'une condition d'arrêt de service est détectée.

7. Procédé tel que revendiqué dans la revendication 6, comprenant en outre l'étape consistant :
à déterminer si un temporisateur a expiré ; et
où l'étape de notification de la condition de service détectée à une fonction de règles de politique et de facturation (28) comprend en outre le fait de notifier à la fonction de règles de politique et de facturation (28) au moyen d'un événement d'arrêt de service s'il est déterminé que le temporisateur a expiré.

8. Procédé tel que revendiqué dans la revendication 6, comprenant en outre le fait :
de notifier à la fonction de règles de politique et de facturation (28) si la condition de service détectée est un début de service ou un arrêt de service au moyen d'une AVP de début-arrêt de service sur le point de référence Gx.

9. Procédé tel que revendiqué dans la revendication 6, comprenant en outre le fait :
de notifier à la fonction de règles de politique et de facturation (28) une adresse IP associée pour la session au moyen d'une AVP d'adresse IP et des informations de flux au moyen d'une AVP de description de composant multimédia sur le point de référence Gx.

10. Procédé tel que revendiqué dans la revendication 6, comprenant en outre le fait :
de notifier à la fonction de règles de politique et de facturation (28) un service auquel la condition de service détectée s'applique au moyen d'une AVP d'identificateur d'application sur le point de référence Gx.

11. Noeud de fonction de règles de politique et de facturation (28) pour un réseau de télécommunications, comprenant :
une interface (32) destinée à recevoir une notification à partir d'une fonction d'application de politique et de facturation (20) d'une condition de service prédéterminée détectée au moyen d'un événement de service défini dans une AVP de déclencheur d'événement sur un point de référence Gx ; et
un dispositif de commande (30) destiné à commander une mise à disposition de service en réponse à la condition de service détectée,
**caractérisé en ce que** l'interface (32) est configurée pour recevoir une notification à partir de la fonction d'application de politique et de facturation (20) d'une détermination selon laquelle une condition d'arrêt de service est détectée au moyen d'un événement d'arrêt de service.

12. Noeud de fonction de règles de politique et de facturation (28) tel que revendiqué la revendication 11, dans lequel l'interface (32) est en outre configurée pour recevoir une notification à partir de la fonction d'application de politique et de facturation (32) d'une détermination selon laquelle un temporisateur a expiré au moyen d'un événement d'arrêt de service.

13. Noeud de fonction de règles de politique et de facturation (28) tel que revendiqué dans la revendication 11, dans lequel l'interface (32) est en outre adaptée pour recevoir une notification indiquant si la condition de service détectée est un début de service ou un arrêt de service au moyen d'une AVP de début-arrêt de service sur le point de référence Gx.

14. Noeud de fonction de règles de politique et de facturation (28) tel que revendiqué dans la revendication 11, dans lequel l'interface (32) est en outre adaptée pour recevoir une notification d'une adresse IP associée pour la session au moyen d'une AVP d'adresse IP et d'informations de flux au moyen d'une AVP de description de composant multimédia sur le point de référence Gx.

15. Noeud de fonction de règles de politique et de facturation (28) tel que revendiqué dans la revendication 11, dans lequel l'interface (32) est en outre adaptée pour recevoir une notification d'un service auquel la condition de service détectée s'applique au moyen d'une AVP d'identificateur d'application sur le point de référence Gx.

16. Procédé de commande de mise à disposition de service dans un noeud d'un réseau de télécommunications (10), le procédé comprenant :
dans une fonction d'application de politique et de facturation (20), le fait :
d'effectuer une détection de trafic de service durant une session ;
de détecter une condition de service prédéterminée à partir de ladite détection de trafic de service ; et
de notifier à une fonction de règles de politique et de facturation (28) la condition de service détectée au moyen d'un événement de service défini dans une AVP de déclencheur d'événement sur un point de référence Gx ;
le procédé dans la fonction d'application de politique et de facturation (20) comprenant en outre le fait :
de déterminer si une condition d'arrêt de service est détectée ; et
où l'étape de notification de la condition de service détectée à une fonction de règles de politique et de facturation (28) est **caractérisée par** le fait de notifier à la fonction de règles de politique et de facturation (28) au moyen d'un événement d'arrêt de service s'il est déterminé qu'une condition d'arrêt de service est détectée ; et
dans la fonction de règles de politique et de facturation (28), le fait :
de recevoir une notification de la condition de service détectée au moyen de l'événement d'arrêt de service ; et
de commander la mise à disposition de service en réponse à la condition de service détectée.

17. Procédé tel que revendiqué dans la revendication 16, dans lequel le procédé dans la fonction d'application de politique et de facturation (20) comprend en outre le fait :
de déterminer si un temporisateur a expiré ; et
où l'étape de notification de la condition de service détectée à une fonction de règles de politique et de facturation (28) comprend en outre le fait de notifier à la fonction de règles de politique et de facturation (28) au moyen d'un événement d'arrêt de service s'il est déterminé que le temporisateur a expiré.

18. Procédé tel que revendiqué dans la revendication 16, comprenant en outre, dans la fonction d'application de politique et de facturation (20), le fait :
de notifier à la fonction de règles de politique et de facturation (28) si la condition de service détectée est un début de service ou un arrêt de service au moyen d'une AVP de début-arrêt de service sur le point de référence Gx.

19. Procédé tel que revendiqué dans la revendication 16, comprenant en outre, dans la fonction d'application de politique et de facturation (28), le fait :
de notifier à la fonction de règles de politique et de facturation (20) une adresse IP associée pour la session au moyen d'une AVP d'adresse IP et des informations de flux au moyen d'une AVP de description de composant multimédia sur le point de référence Gx.

20. Procédé tel que revendiqué dans la revendication 16, comprenant en outre, dans la fonction d'application de politique et de facturation (20), le fait :
de notifier à la fonction de règles de politique et de facturation (28) un service auquel la condition de service détectée s'applique au moyen d'une AVP d'identificateur d'application sur le point de référence Gx.
